Europäisches Patentamt

European Patent Office

Office européen des brevets

(11) Numéro de publication: **0 205 149**
**B1**

## (12) FASCICULE DE BREVET EUROPEEN

(45) Date de publication du fascicule du brevet: **08.08.90**

(51) Int. Cl.⁵: **H 02 H 9/06**

(21) Numéro de dépôt: **86107873.1**

(22) Date de dépôt: **10.06.86**

(54) **Dispositif de protection d'une ligne électrique d'énergie contre des surtensions transitoires élevées.**

(30) Priorité: **12.06.85 FR 8508903**

(43) Date de publication de la demande:
**17.12.86 Bulletin 86/51**

(45) Mention de la délivrance du brevet:
**08.08.90 Bulletin 90/32**

(84) Etats contractants désignés:
**BE CH DE FR GB IT LI NL SE**

(56) Documents cités:
**DE-A-1 638 061**
**FR-A-2 501 931**
**US-A-3 173 029**

(73) Titulaire: **LES CABLES DE LYON Société anonyme dite:**
**170 quai de Clichy**
**F-92111 Clichy Cedex (FR)**

(72) Inventeur: **Hourtane, Jean-Luc**
**69 rue de Paris**
**F-95540 Mery Sur Oise (FR)**
Inventeur: **Girard, Christian**
**18, rue Balmont**
**F-95100 Argenteuil (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne un dispositif de protection d'une ligne électrique d'énergie contre des surtensions transitoires élevées d'origine électromagnétique, comprenant une inductance et un étage à pont écrêteur comportant deux diodes de puissance polarisées en sens contraire, reliées chacune en série avec un condensateur de capacité élevée.

Le document DE-A-1638061 décrit un dispositif de protection d'une ligne électrique en courant alternatif contre des surtensions, comprenant sur chaque conducteur une inductance, puis en dérivation entre ceux-ci et pour chaque alternance un condensateur de capacité élevée en série avec une diode, une résistance aux bornes du condensateur permettant sa décharge. Ce dispositif n'assure cependant pas une protection suffisante contre les impulsions électromagnétiques à front raide et de tension élevée.

La présente invention a pour but de procurer un dispositif de protection plus efficace, tout en restant simple, notamment contre les surtensions dues à la foudre.

Le dispositif selon l'invention est caractérisé en ce que l'inductance est disposée dans un premier étage comportant un éclateur de façon à assurer son découplage par rapport à l'étage à pont écrêteur, et en ce qu'un contacteur temporisé est disposé aux bornes de chaque ensemble diode de puissance-condensateur, de façon à permettre la charge des condensateurs à travers une résistance et des diodes auxiliaires disposées entre le contacteur d'une part et la liaison entre la diode de puissance et le condensateur d'autre part, puis le blocage du pont après que les condensateurs aient été chargés.

Il répond en outre de préférence à au moins l'une des caractéristiques suivantes:

L'éclateur du premier étage est en série avec une varistance reliée à la terre.

Il comprend en outre une résistance et une varistance en série aux bornes de chacun des condensateurs, de façon à permettre de ramener la charge des condensateurs à la valeur initiale du réseau, après écrêtage de la surtension transitoire.

L'inductance du premier étage est en tôle d'aluminium enroulée, non saturable.

Pour la protection contre des surtensions dues à la foudre, la capacité des condensateurs en série avec les diodes de puissance est d'environ 2000 microfarads.

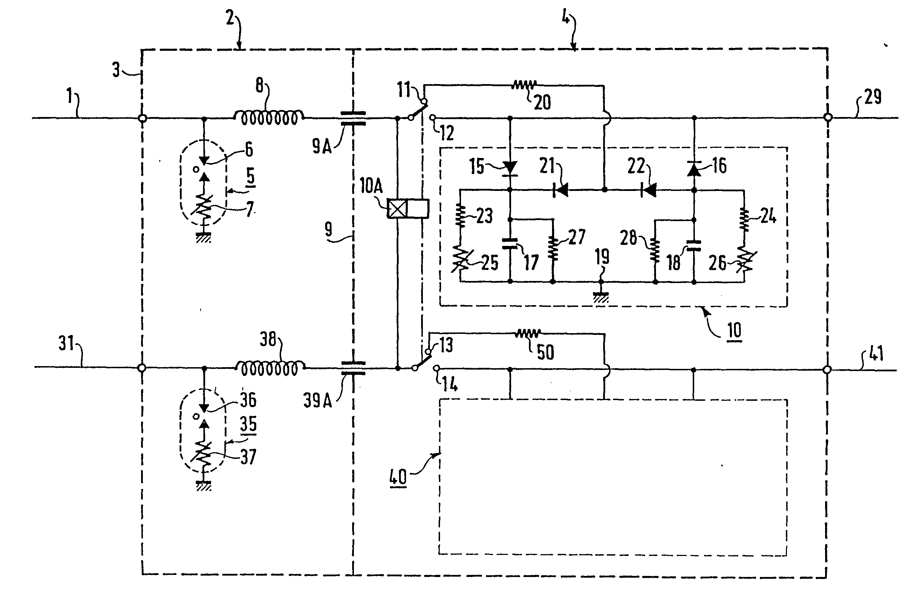

Il est décrit ci-après, à titre d'exemple et en référence à la figure unique du dessin annexé, un dispositif de protection d'une ligne électrique d'énergie de tension normale 220 ou 380 volts, monophasés, de courant permanent compris entre 25 et 700 ampères, contre des perturbations électromagnétiques de toutes natures.

Le dispositif est décrit pour l'essentiel en liaison avec le trajet d'un conducteur de phase, mais il comporte sur le second conducteur les mêmes organes, qui ne seront donc mentionnés que brièvement.

Le conducteur 1 pénétre dans un premier étage 2 disposé dans un blindage en acier 3, qui entoure également le second étage 4. Ce premier étage comprend un parafoudre de puissance 5 formé par un éclateur 6 et une varistance en série 7 reliée à la terre, cette varistance étant destinée à limiter l'intensité évacuée par le parafoudre.

Il comprend en outre une inductance 8 de découplage par rapport au second étage 4. Cette inductance est en tôle d'aluminium, enroulée, non saturable. Elle est de ce fait beaucoup moins volumineuse qu'une inductance classique.

Le premier étage a pour fonction d'absorber de 60 à 80% de l'énergie de l'onde incidente, en écrêtant sa tension à environ 4000 V, et de bloquer les composantes à haute fréquence.

Le premier étage est relié au second à travers la cloison 9 avec découplage par une capacité 9A de l'ordre du microfarad. Celle-ci élimine la partie à haute fréquence qui subsisterait dans l'onde incidente.

Le second étage est principalement constitué d'un pont d'écrêtage 10 comprenant deux diodes de puissance 15, 16 polarisées en sens contraire, chacune étant reliée en série à un condensateur 17, 18 de capacité élevée, de l'ordre de 2000 microfarads, reliées par leur autre borne à la terre (point 19).

Les points de contact entre les diodes de puissance et les condensateurs sont reliés par deux diodes auxiliaires 21, 22 disposées en sens contraires. Aux bornes de chacun des condensateurs sont reliés en série une résistance et une varistance 23, 25 et 24, 26. Une résistance de sécurité 27, 28 aux bornes de chacun des condensateurs, permet leur décharge en cas de coupure du réseau. Enfin un contacteur temporisé 10A comporte une position de charge des condensateurs (borne 11) par l'intermédiaire d'une résistance 20, et une position de repos (borne 12).

A la sortie du second étage, le conducteur 29 relie le dispositif aux appareillages à protéger en aval.

Le fonctionnement de ce second étage est le suivant.

En régime permanent, à la mise sous tension, le commutateur temporisé ferme le circuit passant par la résistance 20. A la mise sous tension, on charge lentement les condensateurs 17, 18 par la résistance 20 et les diodes auxiliaires 21, 22. Le contacteur 10A assure le commutation de la ligne (passage à la borne 12) au bout d'une seconde environ.

On évite ainsi un appel de courant initial trop violent du fait des valeurs élevées des capacités des condensateurs. Ceux-ci sont alors chargés à la valeur de la tension crête du réseau et dans les deux polarités. Les diodes 21, 22 se bloquent et le courant de fuite est alors très faible.

En régime transitoire, lorsqu'une surtension arrive sur la ligne, elle provoque la conduction des diodes de puissance 15, 16, et écrête la surtension du fait de la faible impédance des condensateurs vis-à-vis de la fréquence de la perturbation.

La surtension se trouve par exemple limitée à environ 100 volts en aval dans le réseau (conducteur 29) dans le cas d'une perturbation foudre 8 × 20 microsecondes 50000 ampères.

Le montage résistance-varistance aux bornes des condensateurs ramène après le passage de la surtension, la charge des condensateurs à la valeur antérieure du réseau. On peut remarquer que le contacteur est autoprotégé par le dispositif.

Le second conducteur 31 comporte de façon analogue au premier un parafoudre 35 (éclateur 36, varistance 37), une inductance 38, un condensateur 39A de liaison entre le premier et le second étage, et un pont écrêteur identique référencé globalement 40. Il est relié aux bornes 13, 14 du contacteur, la résistance 50 de charge des condensateurs étant reliée à la borne 13. A la sortie du second étage, le conducteur 41 relie le dispositif aux appareillages à protéger en aval.

**Revendications**

1. Dispositif de protection d'une ligne électrique d'énergie contre des surtensions transitoires élevées d'origine électromagnétique, comprenant une inductance et un étage à pont écrêteur (10) comportant deux diodes de puissance polarisées en sens contraire (15, 16), reliées chacune en série avec un condensateur de capacité élevée (17, 18), caractérisé en ce que l'inductance (8) est disposée dans un premier étage comportant un éclateur (6) de façon à assurer son découplage par rapport à l'étage à pont écrêteur, et en ce qu'un contacteur temporisé (10A) est disposé aux bornes de chaque ensemble diode de puissance-condensateur, de façon à permettre la charge des condensateurs à travers une résistance (20) et des diodes auxiliaires (21, 22) disposées entre le contacteur d'une part et la liaison entre la diode de puissance et le condensateur d'autre part, puis le blocage du pont après que les condensateurs aient été chargés.

2. Dispositif selon la revendication 1, caractérisé en ce que l'éclateur (6) du premier étage est en série avec une varistance (7) reliée à la terre.

3. Dispositif selon les revendications 1 ou 2, caractérisé en ce qu'il comprend en outre une résistance (23, 24) et une varistance (25, 26) en série aux bornes de chacun des condensateurs, de façon à permettre de ramener la charge des condensateurs à la valeur initiale de réseau, après écrêtage de la surtension transitoire.

4. Dispositif selon l'une des revendications 1 à 3, caractérisé en ce que l'inductance (8) du premier étage est en tôle d'aluminium enroulée, non saturable.

5. Dispositif selon l'une des revendications 1 à 4, pour la protection contre des perturbations dues à la foudre, caractérisé en ce que la capacité des condensateurs (17, 18) en série avec les diodes de puissance (15, 16) est d'environ 2000 microfarads.

**Patentansprüche**

1. Schutzeinrichtung für eine elektrische Energieleitung gegen hohe kurzzeitige überspannungen elektromagnetischen Ursprungs, mit einer Induktivität und einer Spitzenbegrenzerbrückenstufe (10), die zwei entgegengesetzt gepolte Leistungsdioden (15, 16) aufweist, welche mit einem Kondensator (17, 18) hoher Kapazität in Reihe geschaltet sind, dadurch gekennzeichnet, daß die Induktivität (8) in einer ersten Stufe mit Funkenstrecke (6) zu deren Entkopplung von der Spitzenbegrenzerbrückenstufe angeordnet ist, und daß ein zeitverzögert ansprechendes Schütz (10A) an die Klemmen jeder Leistungsdioden-Kondensatorgruppe angeschlossen ist, derart, daß das Laden der Kondensatoren über einen Widerstand (20) und über Hilfsdioden (21, 22) erfolgt, die zwischen dem Schütz und der Verbindung zwischen der Leistungsdiode und dem Kondensator angeordnet sind, und das Sperren der Brücke nach dem Laden der Kondensatoren ermöglicht wird.

2. Einrichtung nach Anspruch 1, dadurch gekennzeichnet, daß die Funkenstrecke (6) der ersten Stufe in Reihe mit einem an Erde gelegten Varistor (7) geschaltet ist.

3. Einrichtung nach Anspruch 1 oder 2, dadurch gekennzeichnet, daß sie weiter eine an die Klemmen jedes Kondensators angeschlossenen Reihenschaltung aus einem Widerstand (23, 24) und einem Varistor (25, 26) aufweist, derart, daß die Ladung der Kondensatoren nach der Spitzenbegrenzung der kurzzeitigen überspannung auf den Anfangsnetzwert gebracht wird.

4. Einrichtung nach einem der Ansprüche 1 bis 3, dadurch gekennzeichnet, daß die Induktivität (8) der ersten Stufe aus einem nicht sättigbaren, gerollten Aluminiumblech besteht.

5. Einrichtung nach einem der Ansprüche 1 bis 4, zum Schutz gegen Störungen durch Blitze, dadurch gekennzeichnet, daß die Kapazität der in Reihe mit den Leistungsdioden (15, 16) liegenden Kondensatoren (17, 18) ungefähr 2000 Mikrofarad beträgt.

**Claims**

1. A device for protecting an electric power line against electromagnetically induced high transient overvoltages, comprising an inductance and a peak-limiting bridge stage (10) comprising two oppositely branched diodes (15, 16), each connected in series with a capacitor (17, 18) of high capacitance, characterized in that the inductance (8) is disposed in a first stage comprising a spark-gap (6) to ensure its decoupling from the limiting bridge stage, and that a time-delay contactor (10A) is disposed at the terminals of each power diode-capacitor assembly to enable charging of the capacitors through a resistor (20) and auxiliary diodes (21, 22) disposed between the contactor on the one hand, and the connection point between the power diode and capacitor on the other hand, and blocking of the bridge once the capacitors have been charged.

2. A device according to claim 1, characterized in that the spark-gap (6) of the first stage is series-connected with a varistor (7) connected to ground.

3. A device according to claim 1 or 2, characterized in that it further comprises a resistor (23, 24) and a varistor (25, 26) series-connected to the terminals of each of the capacitors, so as to enable the charge of the capacitor to be brought to the initial mains value after peak limiting of the transient overvoltage.

4. A device according to one of claims 1 to 3, characterized in that the first stage inductance (8) is made of a nonsaturable wrapped aluminum sheet.

5. A device according to one of claims 1 to 4 intended to protect against disturbances caused by lightnings, characterized in that the capacitance of the capacitors (17, 18) in series with the power diodes (15, 16) is approximately 2000 microfarads.

1